Europäisches Patentamt

European Patent Office

Office européen des brevets

(11) Veröffentlichungsnummer: **0 288 896**
**A1**

(12) **EUROPÄISCHE PATENTANMELDUNG**

(21) Anmeldenummer: 88106353.1

(51) Int. Cl.⁴: **F16L 3/22**

(22) Anmeldetag: 21.04.88

(30) Priorität: 25.04.87 JP 63268/87

(43) Veröffentlichungstag der Anmeldung:
02.11.88 Patentblatt 88/44

(84) Benannte Vertragsstaaten:
**DE FR GB IT**

(71) Anmelder: **TOYODA GOSEI CO., LTD.**
**1, Aza-Nagahata Ohaza-Ochiai Haruhimura**
**Nishikasugai-gun Aichi-ken(JP)**

(72) Erfinder: **Omori, Norio**
**37, Aza-Narako Oaza-Toyota**
**Oguchi-cho Niwa-gun Aichi-ken(JP)**

(74) Vertreter: **Kirchgaesser, Johannes**
**Bahnhofstrasse 3**
**D-7859 Efringen-Kirchen(DE)**

(54) **Kabelklemme.**

(57) Bei der erfindungsgemäßen Klemme, die mit
einem Befestigungsteil (30) mit einer Kralle (27) und
einem Klemmteil (31) zum Ergreifen von Kabeln (9)
versehen ist, gräbt die Kralle (27) sich in ein Aufnahmeteil (13) ein, das von der Oberfläche eines Kunststoffgehäuses (11) absteht, so daß das Befestigungsteil (30) auf dem Aufnahmeteil (13) befestigt ist.
Hierbei ist das Klemmteil (31) durch ein Filmscharnier (49) mit einem Sicherungsteil (33) verbunden, das seinerseits an dem Befestigungsteil (31)
ansitzt und mit einer Haltekralle (39) versehen ist.
Das Klemmteil (31) besitzt außerdem einen beweglichen Klemmbügel (43), versehen mit einem Gleitstück (47), auf dem eine Anordnung von Sägezähnen (45) angeformt ist, wobei die Sägezahn-Anordnung (45) des Gleitstücks (47) mit der Haltekralle
(39) in Form einer Rasterung in Wirkverbindung
steht, so daß der Winkel zwischen dem Sicherungsteil (33) und dem beweglichen Klemmbügel (43)
festlegbar ist.

FIG.1

## Kabelklemme

Die vorliegende Erfindung bezieht sich auf eine Kabelklemme, bestehend aus einem Befestigungsteil mit einer Kralle und einem Klemmteil zum Halten eines Kabels oder Kabelbündels, wobei die Kralle an einem Aufnahmeteil befestigt ist, welches von der Oberseite eines Kunststoffgehäuses absteht, so daß das Befestigungsteil am Aufnahmeteil angefügt ist.

Bei einer bekannten Klemme der vorgenannten Art ist ein Stahlblech in W-artiger Form gebogen. Eine der Aussparungen, welche die W-Form bilden, ist als Befestigungsteil ausgebildet und die andere als Klemmteil. Eine Kralle befindet sich an der Außenwand des Befestigungsteils.

Diese Klemme wird in der Weise gebraucht, daß das Befestigungsteil auf einem plattenförmigen Aufnahmeteil befestigt wird, welches von der Oberfläche eines Instrumentengehäuses absteht und die Drahtkabel für Meßinstrumente, Schalter oder dgl., die im Instrumentengehäuse zu installieren sind, durch das Klemmteil umgriffen werden. Das Befestigungsteil ist auf dem Aufnahmeteil durch leichten Klemmsitz befestigt, so daß, wenn das Befestigungsteil von außen auf das Aufnahmeteil aufgedrückt wird, die Krallen sich wegen der Steifigkeit des Befestigungsteils in die seitliche Oberfläche des Aufnahmeteils eingraben. Auf der anderen Seite wird das Klemmteil durch Verringerung des Durchmessers einer bleibenden Deformation unterworfen, wenn man eine Spannvorrichtung oder dgl. benutzt, um das Kabel einzuspannen. Deshalb wird das Klemmteil 5 vorzugsweise für größere Abmessungen gebaut und dann plastisch verformt, weil durch das Hinzufügen von Ausstattungsteilen in das Fahrzeug die Anzahl und/oder die Dicke der Kabel auf der Oberfläche des Instrumentengehäuses verändert und für die Standardisierung der Teile Flexibilität im Durchmesser des Klemmteils 5 gefordert wird.

Damit das Befestigungsteil bei der vorerwähnten Klemme ausreichende Steifigkeit besitzt, um die Kralle in das Aufnahmeteil einzugraben, muß die Klemme zunächst in W-Form gebogen und dann gehärtet werden. Da jedoch die Härtungshitze natürlich auch auf das Klemmteil übertragen wird, ist diese Position dadurch auch verfestigt und kann dann später nicht mehr einer plastischen Deformation unterworfen werden.

Aufgabe der Erfindung ist es daher, eine Kabelklemme der eingangs erwähnten Art zu - schaffen, deren Befestigerteil einerseits eine ausreichende Steifigkeit besitzt, um die Krallen in das Aufnahmeteil einzugraben, und deren Klemmteil andererseits geeignet ist zur Aufnahme von Kabeln oder Kabelbündeln mit unterschiedlichen Durchmessern. Diese Aufgabe wird durch die in den Ansprüchen angegebene Erfindung gelöst, bei der eine vorbeschriebene Sägezahnreihe mit der Haltekralle in Wirkverbindung ist. Dadurch kann der eingeschlossene Winkel zwischen beiden Teilen gesichert werden bei einem vorbestimmten Kabeldurchmesser und die Kabel können auch bei unterschiedlichen Durchmessern durch das Sicherungsteil und den beweglichen Klemmbügel noch ergriffen werden.

Diese Erfindung bietet außerdem noch folgenden Vorteil: Wenn die eingerastete Position der Sägezahnreihe inbezug auf die Haltekralle verändert werden soll, dann kann der gesicherte, eingeschlossene Winkel zwischen dem Sicherungsteil und dem beweglichen Klemmbügel trotzdem - schrittweise verändert werden. Um diese Änderung zu bewerkstelligen, muß der bewegliche Klemmbügel einfach von Hand auf das Sicherungsteil gedrückt werden.

Die Erfindung soll nun anhand von Ausführungsbeispielen beschrieben werden, welche in den Zeichnungen dargestellt sind. Es zeigt

Figur 1 die Vorderansicht einer Klemme nach einer ersten Bauform,

Figur 2 die Unteransicht hierzu,

Figur 3 die Seitenansicht von rechts auf diese Bauform,

Figur 4 eine Vorderansicht einer Klemme nach einer zweiten Bauform,

Figur 5 eine Unteransicht hierzu,

Figur 6 eine Vorderansicht einer Klemme nach einer dritten Bauform und

Figur 7 eine Unteransicht hierzu.

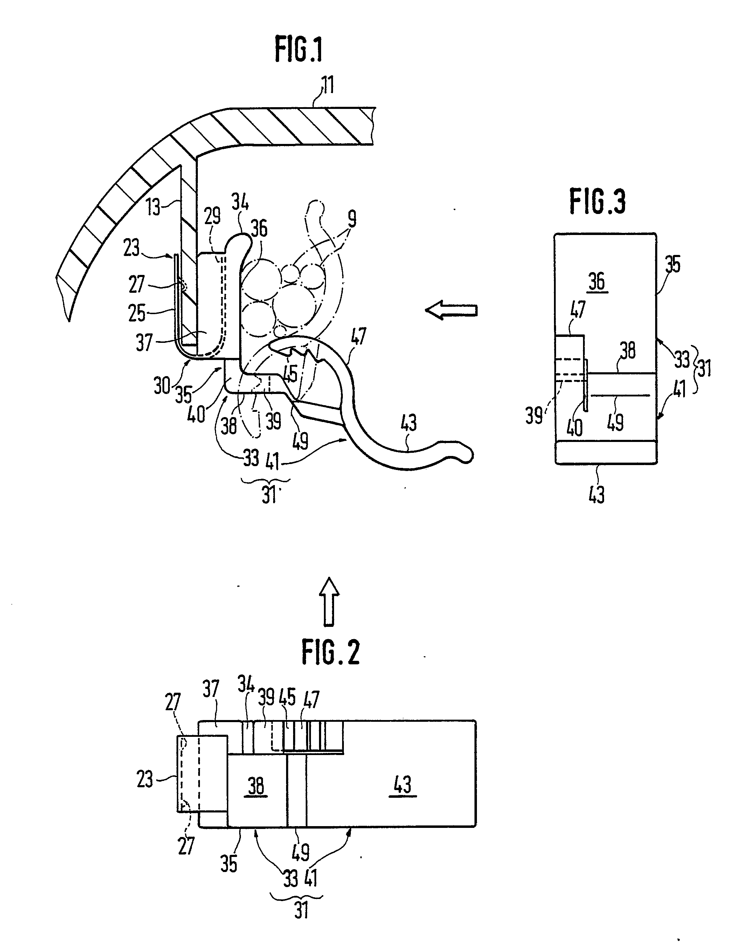

Wie in den Figuren 1 - 3 dargestellt, umfaßt die Klemme nach der ersten Ausführungsform eine U-förmige Klammer 23 aus Stahlblech und ein Klemmteil 31 aus Kunststoffmaterial.

Bei der Klammer 23 ist eine Kralle 27 an der einen Wand 25 angesetzt, und zwar abwärts nach innen gerichtet, während die andere Wand 29 hiervon in einen rückwärtigen Teil 37 des Klemmteils 31 eingebettet und zu dieser fixiert ist. Die Wand 25 mit der Kralle 27 und dem rückwärtigen Teil 37 des Klemmteils 31 bilden zusammen das Befestigungsteil 30. Die Metallklammer 23 ist gehärtet, so daß die Kralle 27 in die Seitenfläche des Aufnahmeteils 13 eines Instrumentengehäuses 11 sich eingräbt. Nach der Vergütung wird das Verspritzen des Klemmteils 31 durchgeführt unter Verwendung der Klammer 23 als Einsatz, wodurch das Klemmteil 31 im rückwärtigen Teil 37 befestigt ist. Oder aber im rückwärtigen Teil 37 ist ein Schlitz vorgesehen und die andere Wand 29 kann in den Schlitz mit Gewalt eingedrückt werden, so daß die Klammer 23 und das Klemmteil 31 zueinander fixiert sind.

Das Klemmteil 31 ist zusammengesetzt aus einem Sicherungsteil 33 und einem beweglichen Teil 41. Das Sicherungsteil 33 ist zusammengesetzt aus einer L-förmigen Sicherungsplatte 35, das o.g. rückwärtige Teil 37, welches einstückig mit der rückwärtigen Seite einer vertikalen Platte 36 der Sicherungsplatte 35 vergossen ist, und einer Haltekralle 39, welche vom horizontalen Schenkel 38 der Sicherungsplatte 35 absteht. Das rückwärtige Teil 37 und die Haltekralle 39 sind an der Sicherungsplatte 35 angeformt und eine Aussparung 40 zum Einführen eines nachfolgend beschriebenen Gleitstücks 47 ist zwischen dem rückwärtigen Teil 37 und der Haltekralle 39 ausgeformt. Ebenso ist auf dem oberen Endteil der senkrechten Wand 36 der Sicherungsplatte 35 ein verdicktes Teil 34 ausgeformt, um das Kabel 9 davor zu schützen, herausgezogen zu werden.

Das bewegliche Teil 41 ist in angenäherter, umgekehrter S-Form zusammengesetzt aus einem gebogenen Klemmbügel 43 und einem Gleitstück 47 mit einer Säge-Zahnreihe 45 auf seiner Unterseite. Der bewegliche Klemmbügel 43 ist an dem waagerechten Schenkel 39 der Sicherungsplatte 35 mit einem Filmscharnier 49 verbunden.

Unter Filmscharnier versteht man hierbei ein bandförmiges dünnes Teil, aus elastischem Kunststoff geformt, wobei das Filmscharnier leicht gebogen werden kann. Über das Filmscharnier 49 sind der horizontale Schenkel 38 und der bewegliche Klemmbügel 43 im unbelasteten Zustand annähernd in der gleichen Ebene positioniert.

Die Haltekralle 39 und das Gleitstück 47 sind auf einem imaginären Rundkreis um das Filmscharnier 49 angeordnet. Wenn der bewegliche Klemmbügel 43 in dieser Lage im Gegenuhrzeigersinn von der durchgezogenen Linie zu der strichpunktierten Linie in Figur 1 geschwenkt worden ist, greift die Sägezahnreihe 45 des Gleitstücks 47 in die Haltekralle 39 ein. Dieses Ineinandergreifen geschieht automatisch, wenn der bewegliche Klemmbügel 43 von Hand auf die Seite der Sicherungsplatte 35 gedrückt und das Ergreifen des Kabels 9 durch das Klemmteil 31 abgesichert wird. ·

Das bewegliche Teil 41, welches um das Filmscharnier 49 in der Zeichenblattebene in Figur 1 schwenkbar ist, rastet ein, wenn die Sägezahnreihe 45 mit der Haltekralle zusammenwirkt. Dadurch können die Sicherungsplatte 35 und der bewegliche Klemmbügel 43 die Kabel 9 umgreifen. Während des Greifvorgangs wird der bewegliche Klemmbügel 43 in die strichpunktierte Lage aufwärts geführt. Vorteilhafterweise werden die Sägezahnreihe 45 und die Haltekralle 39 ohne Klappern in Halteposition gehalten. Außerdem muß der Winkel zwischen der Sicherungsplatte 35 und dem beweglichen Klemmbügel 43 eingestellt werden entsprechend der Abweichung des Durchmessers und/oder der Anzahl der Kabel 9. Im Ausführungsbeispiel ist die Sägezahnreihe 45 des Gleitstücks 47 dreistufig ausgebildet, so daß der eingeschlossene Winkel zwischen beiden Teilen 35 und 43 in drei Schritten fixiert werden kann. Natürlich ist die Stufenzahl in der Sägezahnreihe 45 beliebig.

Weiterhin ist es beim vorliegenden Ausführungsbeispiel der Klemme während des Haltens möglich, das Vorderende des Gleitstücks 47 wegzudrücken und so die Verhakung zwischen der Haltekralle 39 und der Sägezahnreihe 45 zu lösen; dadurch können die Kabel 9 leicht aus dem Klammerteil 31 herausgeholt werden. Natürlich können die Kabel 9 erneut von dem Klammerteil 31 aufgenommen werden.

Selbst wenn bei der vorliegenden Ausführungsform der Klemme die Sägezahnreihe 45, die am äußersten Teil der Unterseite des Gleitstücks 47 angeformt ist, mit der Haltekralle 39 verhakt ist, ist es vorteilhaft, wenn der zwischen dem horizontalen Schenkel 38 der Sicherungsplatte 35 und dem beweglichen Klemmbügel 43 wie gezeichnet 90° oder mehr wird. Wenn der eingeschlossene Winkel weniger als 90° beträgt, wird der bewegliche Klemmbügel 43 eine Stütze und die Reaktion der Kabel 9 wird deshalb keinen Einfluß auf die Verbindung zwischen der Sägezahnreihe 45 und der Haltekralle 39 haben.

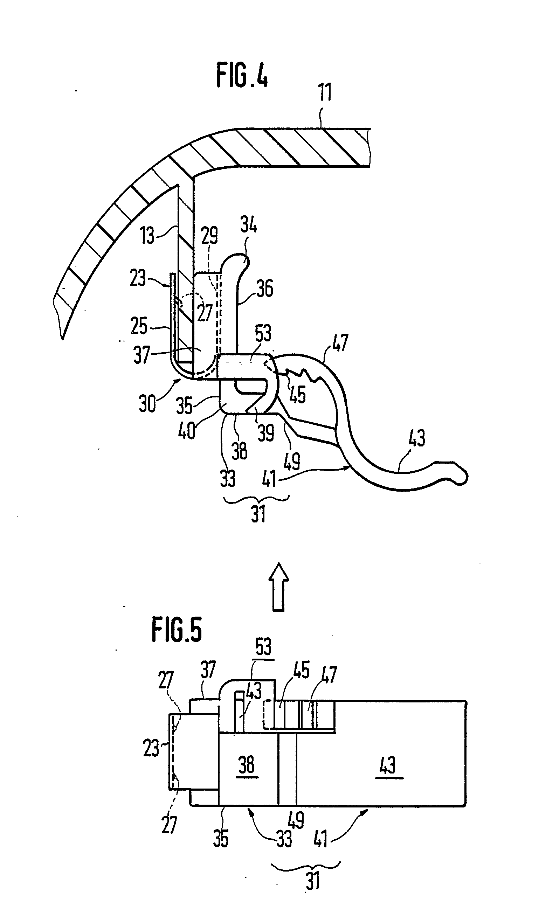

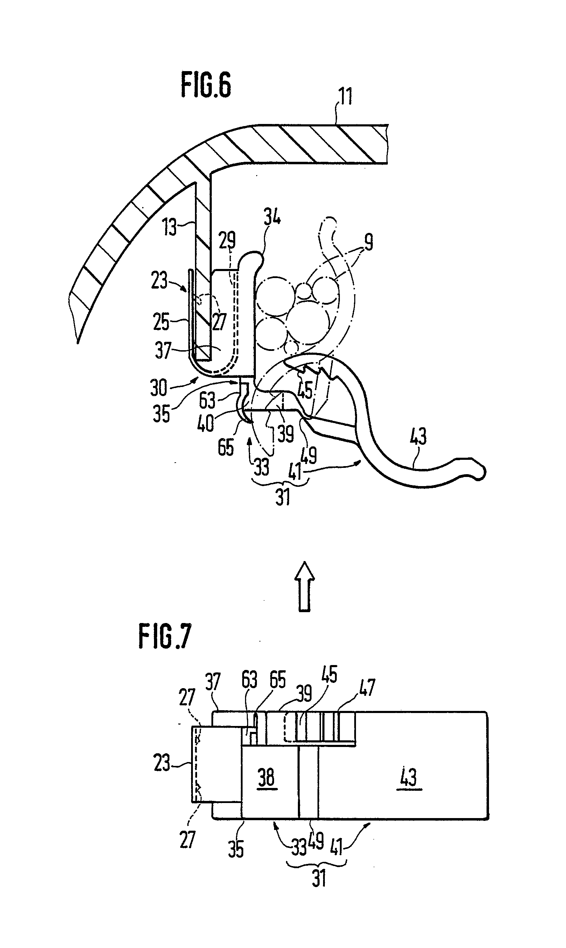

Figur 4 zeigt ein Anwendungsbeispiel der Klemme in einer bevorzugten Ausführungsform und Figur 5 die zugehörige Unteransicht. Die gleichen Teile wie die beim ersten Ausführungsbeispiel sind hierbei mit den gleichen Bezugszahlen bezeichnet, so daß auf deren Beschreibung verzichtet werden kann.

Die Klemme nach dieser Ausführungsform ist dadurch gekennzeichnet, daß ein Schutz 53 in Brückenform zwischen dem rückwärtigen Teil 37 und der Haltekralle 39 der ersten Ausführungsform angeordnet ist, welche in der gleichen Höhe über dem Filmscharnier 49 verläuft wie der Außenbogen des Gleitstücks 47. Aufgrund dieser Schutzbrücke 53 wird das Gleitstück 47 nicht tangiert, auch wenn ein Gewicht in der Klammerbreite auf das Gleitstück 47 einwirkt. Vorteilhafterweise kann die Rastverbindung zwischen der Sägezahnreihe 45 und der Haltekralle 39 dadurch noch sicherer gehalten werden.

In den Figuren 6 und 7 ist eine weitere Ausführungsform der Klemme dargestellt. Die gleichen Teile wie diejenigen der ersten Ausführungsform sind wieder mit den gleichen Bezugszahlen bezeichnet, so daß eine besondere Beschreibung nicht erforderlich ist.

Die Klemme nach dieser Ausführungsform ist dadurch gekennzeichnet, daß ein Haltearm 63 am unteren Ende der vertikalen Wand 36 vor der Aussparung 40 angeformt ist und ein Führungsbügel 65 von diesem Haltearm 63 abwärtsgerichtet absteht.

Dieser Führungsbügel 65 ist federelastisch ausgebildet und drückt gegen die obere Außenfläche des Gleitstücks 47, wodurch dieses bei Betrachtung der Figur 6 nach rechts gezwungen wird. Als Folge davon ist das Ineinandergreifen zwischen der Sägezahnreihe 45 und der Haltekralle 39 weiter stabilisiert. Bei dieser Ausführungsform kann auch eine Schutzbrücke 53 wie bei der zweiten Ausführungsform vorgesehen sein.

## Ansprüche

1. Kabelklemme, bestehend aus einem mit einer Kralle versehenen Befestigungsteil und einem Klemmteil zum Halten von Kabeln mit variablen Durchmessern, wobei die besagte Kralle sich in ein Aufnahmeteil eingräbt, welches von der Oberfläche eines Kunststoffgehäuses absteht, so daß das Befestigungsteil am Aufnahmeteil befestigt ist und worin das Klemmteil **gekennzeichnet** ist durch
- ein Sicherungsteil (33), das mit dem Befestigungsteil (30) verbunden und mit einer Haltekralle (39) versehen ist und
- ein bewegliches Teil (41), versehen mit einem gleitenden Führungsstück (47), auf welchem eine Sägezahnreihe (45) angeformt ist, wobei
- das besagte Sicherungsteil (33) und das bewegliche Teil (41) durch ein Filmscharnier (49) miteinander verbunden sind und
- die besagte Zahnreihe (45) hierbei in die Haltekralle (39) einrastet, so daß der zwischen dem Sicherungsteil (33) und dem beweglichen Teil (41) eingeschlossene Winkel festlegbar ist.

2. Kabelklemme nach Anspruch 1, dadurch gekennzeichnet, daß zwischen dem rückwärtigen Teil (37) und der Haltekralle (39) eine Schutzbrücke (53) angeordnet ist, welche in der gleichen Höhe über dem Filmscharnier (49) verläuft wie der Außenbogen des Gleitstücks (47).

3. Kabelklemme nach Anspruch 1 oder 2, dadurch gekennzeichnet, daß ein Haltearm (63) am unteren Ende der vertikalen Wand (36) vor der Aussparung (40) angeformt ist und von diesem Haltearm (63) ein federelastisch ausgebildeter Führungsbügel (65) abwärtsgerichtet absteht.

FIG.1

FIG.3

FIG.2

## FIG.4

11

13    29    34

23    36

25    27    53    47

37    45

30    35    39

40    38    49

33    41

31

## FIG.5

53

37    45    47

27    43

23    38    43

27    49

35    33    41

31

## FIG.6

11

13

34

29

9

23

25

27

37

30

63

35

45

40

65

39

33

41 49

43

31

## FIG.7

27

37

63

65

39

45

47

23

38

43

27

35

33 49 41

31

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 369 129  (UNITED-CARR FASTENER CORP.) * Figuren * | 1 | F 16 L    3/22 |
|  | --- |  |  |
| Y | DE-A-2 516 844  (TUCKER METALLWAREN GmbH) * Figuren * | 1 |  |
|  | --- |  |  |
| A | DE-A-3 511 265  (DEMEL) * Figuren * | 1 |  |

RECHERCHIERTE SACHGEBIETE (Int. Cl.4)

F 16 L

Der vorliegende Recherchenbericht wurde für alle Patentansprüche erstellt

| Recherchenort | Abschlußdatum der Recherche | Prüfer |
|---|---|---|
| DEN HAAG | 27-06-1988 | HUBEAU M.G. |

EPO FORM 1503 03.82 (P0403)